# EUROPEAN PATENT SPECIFICATION

(11) **EP 1 559 987 B1**
(45) Date of publication and mention of the grant of the patent: **05.09.2007**
(21) Application number: 05250061.8
(22) Date of filing: 07.01.2005
(51) Int. Cl.: F42C 15/00, F42C 15/34, F42C 15/40, H01H 35/14

(54) **Micromechanical latching switch**
Mikromechanischer verriegelbarer Schalter
Commutateur micromécanique à verrouillage

(30) Priority: 27.01.2004 US 766451
(43) Date of publication of application: 03.08.2005
(73) Proprietor: Lucent Technologies, Inc., Murray Hill, New Jersey 07974-0636 (US)
(72) Inventor: Greywall, Dennis S., Whitehouse Station New Jersey 08889 (US)
(74) Representative: Sarup, David Alexander

(56) References cited:
- US-A- 6 064 013
- US-A- 6 074 890
- US-A- 6 130 464
- US-B1- 6 167 809
- US-B1- 6 314 887
- US-B1- 6 321 654
- US-B1- 6 568 329

## Description

### TECHNICAL FIELD OF THE INVENTION

This invention relates generally to an arming device used in fusing of projected munitions and, more particularly, to a micromechanical latching switch for use in an arming device.

### BACKGROUND OF THE INVENTION

Artillery shells are equipped with a safety and arming device (S&A) that permits detonation of the carried explosive only after the projectile has experienced a valid progression of physical launch conditions, including the huge initial acceleration (10,000-80,000g). The arming device functions with sequential interlocks to remove a barrier in the fire train and/or to move out-of-line fire-train components into alignment. Once armed, the device can be fused with, e.g., an electrical discharge or a laser pulse. For safety, the S&A is required to be able to withstand a munitions mishandling drop from 40ft. without damage or arming.

A typical arming device is centimeter sized and piece part assembled using screws, pins, springs, and tight-tolerance machined components. Shelf life is affected by the use of dissimilar materials and by the need for lubrication. Recent arming device modernizing efforts have been motivated by lower cost, weight, and volume. One such arrangement described by C. H. Robinson in U. S. Patent No. 6,167,809 entitled "Ultra-Miniature, Monolithic, Mechanical Safety-and-Arming Device for Projected Munitions" is directed towards a monolithic metal (nickel) device fabricated using the LIGA micro machining process.

U.S. Patent No. 6,167,809 discloses a safety and arming device having a first slider that can move with respect to the second and third sliders, wherein the third slider serves as a safety interlock, which, when engaged, prevents the second slider from moving and, when disengaged, enables the spring connected between the first and second sliders to move the second slider into the final armed position. A single element, i.e., the spring connected between the first and second sliders, is involved during both the initial arming stage and the final arming stage. However, this functional sharing of the same element during the two arming stages might be disadvantageous in terms of protection against the element malfunction.

Notwithstanding the recent improvements made in these arming devices, there is a continuing need for further miniaturization and improved safety of arming devices.

### SUMMARY OF THE INVENTION

Problems in the prior art are addressed, e.g., as specified in claim 1.

In accordance with the present invention, a micro-electrical-mechanical-systems (MEMS) arming device is formed from a micromachined monolithic semiconductor device having multiple-interlocks that is partially armed by the launch acceleration and fully armed by on-demand thermal activation.

More particularly, my MEMS monolithic semiconductor device comprises
a semiconductor wafer, a first dielectric layer formed on the semiconductor wafer, and a second semiconductor layer formed on the first layer;
a first latching movable shuttle formed in the second layer and having the first layer removed under the first shuttle, the first shuttle being moved in a first direction relative to the wafer in response to a predetermined acceleration of the MEMS device in a direction opposite to the first direction, so as to change an operating condition of the MEMS device from a first switch state to an intermediate switch state;
a second latching moveable shuttle formed within the first shuttle, the second shuttle being moved in a second direction relative to the first shuttle in response to a thermally activated force so as to change the operating state of the MEMS device from the intermediate switch state to a second switch state; and
wherein in the second switch state an opening in the second shuttle aligns with an opening in the wafer to enable an optical signal to pass through the aligned openings.

In a second embodiment, my MEMS, monolithic semiconductor device comprises a semiconductor wafer, a first electrically insulating layer formed on the semiconductor wafer, and a second semiconductor layer formed on the first layer;
a latching movable shuttle switch formed in the second layer and having the first layer removed under the shuttle switch, the shuttle switch being moved in a first direction relative to the wafer in response to a predetermined acceleration of the MEMS device in a direction opposite to the first direction, thereby changing an operating state of the shuttle switch.

According to another feature, my MEMS device includes means for preventing the movement of the second shuttle prior to the latching of the first shuttle. Another feature includes an electrical switch for providing an electrical switch connection when the MEMS device is in the intermediate switch state. Yet another feature includes an absorbing stop formed in the second layer for limiting the movement of the first shuttle in the first direction. According to another feature the MEMS device is formed by (A) first patterning and etching the first shuttle in the second layer and stopping on the first dielectric layer, (B) patterning and etching a predetermined pattern in the semiconductor wafer from the bottom surface and stopping on the first dielectric layer, (C) etching away the exposed regions of the first dielectric layer, and (D) continuing this etch to allow undercutting sufficient to free the shuttle from the substrate.

### BRIEF DESCRIPTION OF THE DRAWINGS

The present invention will be more fully appreciated by consideration of the following Detailed Description, which should be read in light of the accompanying drawings in which:
Figs. 1A - 1C illustrate a top view of a first embodiment of my MEMS device as an arming device, respectively, when in the safe position, the partially armed position and the fully armed position.
Fig. 2 illustrates my MEMS arming device further including an electrical interlock.
Fig. 3 is a B - B cross section view of the MEMS arming device showing the etching processes from the top and bottom sides.
Fig. 4 is a top view of the MEMS arming device showing, in dotted-line form, the Silicon Wafer mask used to etch shuttle A from the bottom or wafer side.
Fig. 5 more clearly illustrates the Silicon Wafer mask, shown in dotted-line form in Fig. 4, which is used to etch shuttle A from the wafer side.
Fig. 6 is an A - A cross section view of the MEMS arming device showing that the Oxide layer is etched away below the moveable components of top Silicon layer.
Fig. 7 shows a second embodiment of my MEMS device having only one shuttle.
Figs. 8 - 11 show details of the Latch Element, Absorbing Stop, Support Spring, and Shuttle B, respectively.
Fig. 12 shows an illustrative munition including my MEMS arming device.
In the following description, identical element designations in different figures represent identical elements. Additionally in the element designations, the first digit refers to the figure in which that element is first located (e.g., 101 is first located in Fig. 1).

### DETAILED DESCRIPTION

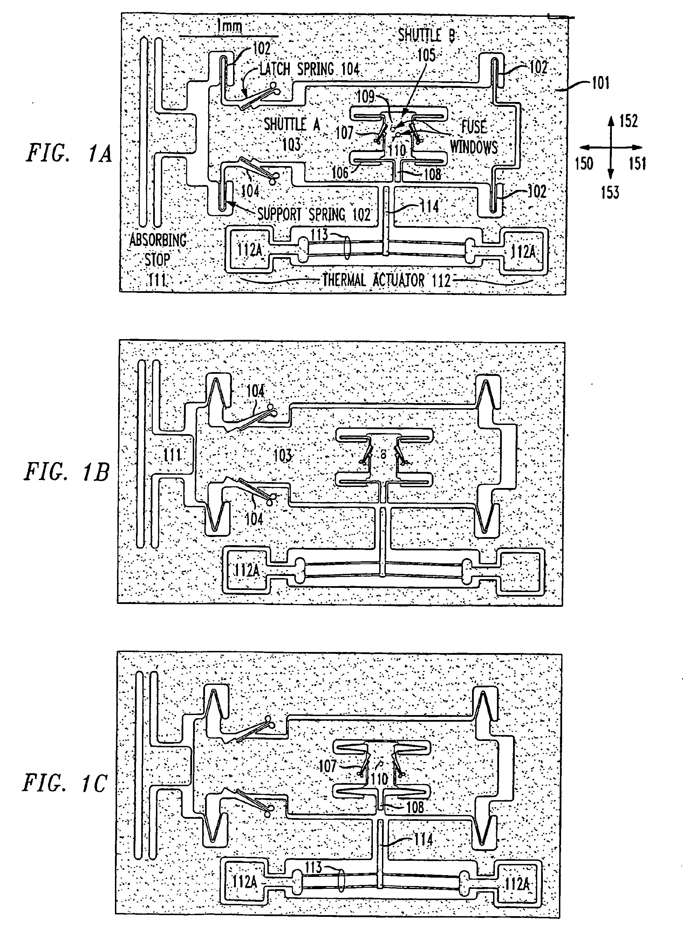

With reference to Figs. 1A - 1C there is shown, in accordance with the present invention, an illustrative embodiment of my micro-electrical-mechanical-switch (MEMS) device (or MEMS shutter) 100 used as an arming device. It should be noted that while my MEMS device is described for use as an arming device, it more generally can be used in other applications requiring an inertial latching switch, e.g., an automotive accelerometer. The MEMS arming device 100 is implemented as part of a fusing arrangement of a munition (also referred herein as an ordnance), the fusing arrangement being used to detonate that munition once it has been fired. In Fig. 1A, the MEMS arming device 100 is shown in a rest position (first switch state) prior to the munition being fired. In Fig. 1B the MEMS arming device 100 is shown in a partially armed position (intermediate switch state) after the munition has been fired. In Fig. 1C, the MEMS arming device 100 is shown in a fully armed position (second switch state) after the munition has been fired and then thermally activated.

Shown in Fig. 12 is an illustrative fusing arrangement 1201 of a munition (ordnance) 1200 including a laser 1202, my MEMS arming device 1203, ignitor 1204 and explosive charge 1206. In Fig. 12A, my MEMS arming device 1203 is shown in its rest position (Fig. 1A - prior to being fired) in which the fuse windows 109 and 110 are not aligned and hence laser 1002 signal is blocked from igniting the ignitor charge 1204. In Fig. 12B, as will be discussed in detail in later paragraphs, after the munition 1200 is fired and the MEMS arming device 1203 is moved to its fully armed position (Fig. 1C), the fuse windows 109 and 110 are aligned enabling laser 1202 signal to ignite the ignitor charge 1204 and detonate 1005 explosive charge 1206. In one illustrative embodiment, my MEMS arming device 100 may be implemented as part of the fusing arrangement described in the concurrently filed patent application of D. Bishop et al case 56 - 3 - 2, entitled "FUSE FOR PROJECTED ORDNANCE," Publication No. US 2005/0183605 A1.

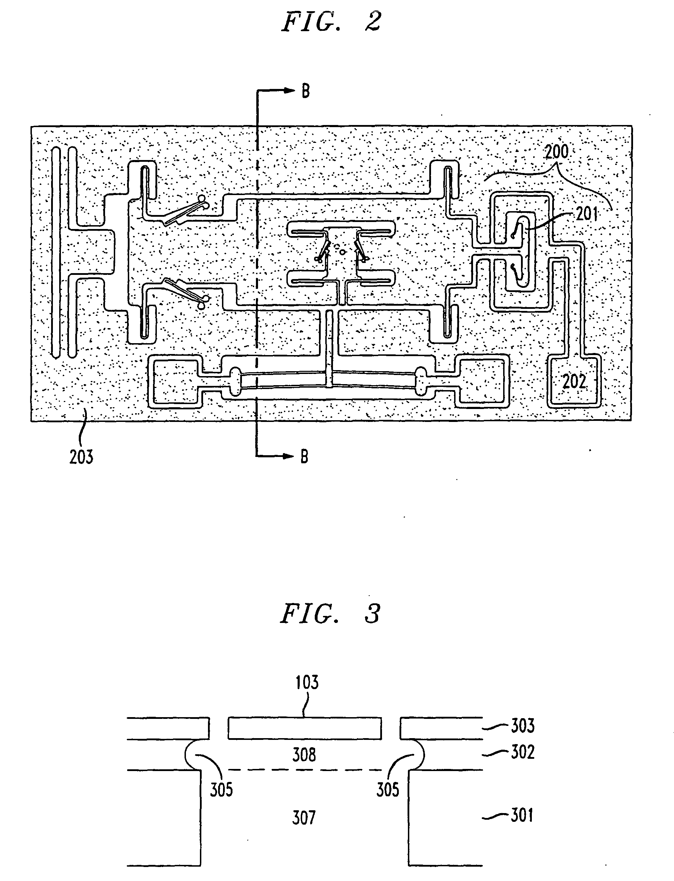

The MEMS arming device 100, as shown in Figs. 1A - 1C, is formed on a SOI wafer, illustratively shown to be 4mm high and 6mm wide. The SOI wafer is shown illustratively in Fig. 3 to be implemented on a Silicon wafer (or handle) 301 that has an Oxide layer 302 (e.g., Silicon Oxide) and a Silicon layer 303 formed thereon. While a SOI wafer is shown in Fig. 3, it should be understood that other types of semiconductors (e.g., Germanium, Gallium Arsenide) may be used.

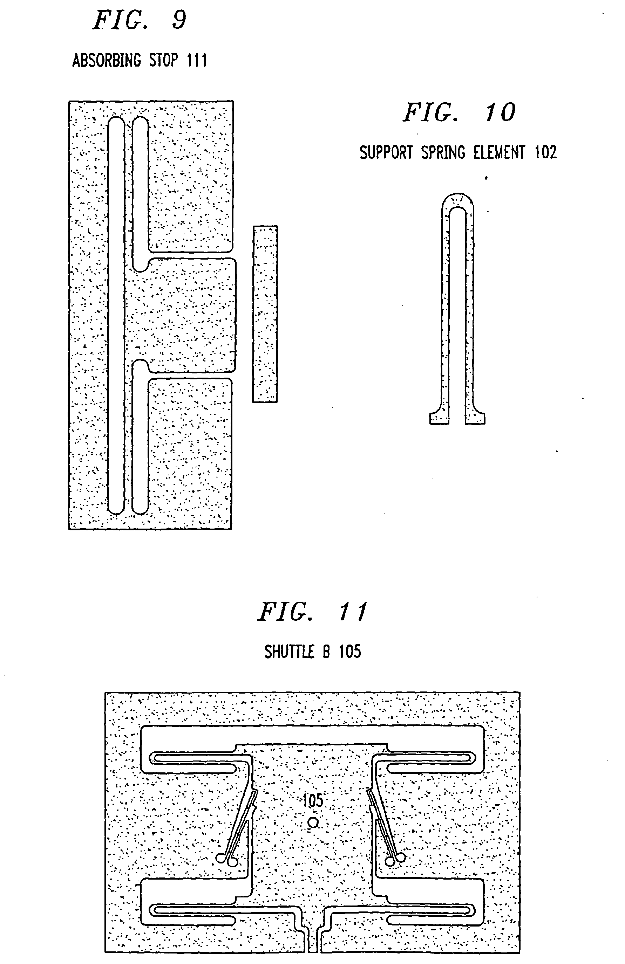

The MEMS arming device 100 is formed by selectively etching the Silicon wafer 301, Oxide layer 302, and a Silicon layer 303. In Figs. 1A - 1C, the Silicon layer 303 is shown in grey and the etched-out region of the Silicon layer reveals the Silicon Oxide layer 302, shown in white. With reference to Fig. 1A, the MEMS arming device 100 is shown in its rest position (first switch state), prior to the munition being fired (Fig. 10A). The Shuttle A, 103, is formed in the Silicon layer and is supportably attached to housing 101 using four support springs, e.g., 102. Shuttle A, 103, also includes two latch springs, e.g., 104, for latching shuttle A's position once it has moved a predetermined distance in direction 150. The latch springs 104 also restrict shuttle A's movement within housing 10 1 in only direction 150.

Shuttle B, 105, is etched within the shuttle A, 103, and is supported by Shuttle A using four support springs, e.g., 106. Shuttle B also has two latch springs, e.g., 107 for latching shuttle B's position once it has moved a predetermined distance in direction 152. Preferably, the direction 152 is perpendicular to the direction 151. Shuttle B has a vertical extension 108 that is etched in a vertical channel of shuttle A which enables shuttle B to move essentially only in the upward vertical direction 152. The shuttle B has etched therein a circular fuse window 109. The Silicon Wafer 301 also has a circular fuse window 110 etched therein, which is offset in both the vertical direction 153 and horizontal direction 151 relative to fuse window 109.

A spring-suspended absorbing stop 111 is also etched from the housing frame 101 to limit the movement of shuttle A in the direction 150. A thermal actuator 112 is etched from housing 101 and includes two horizontal arms 113 and a vertical push-rod 114 mounted perpendicular to the midpoint of the two arms. When an electrical current is applied to thermal actuator 112 and through arms 113, the arms are heated. This causes the arms to expand and deflect in an upward direction forcing push-rod 114 in the vertical direction 152, thereby generating an upward force (thermally activated force) applied to the vertical extension 108 of shuttle B. It should be noted that the thermal activator may, more generally, include one or more arms connected to push-rod 114.

The arms 113 are formed to have an upward bow to insure that they deflect upward in the direction 152 when heated. As shown, as a safety feature, push-rod 114 is not aligned with extension 108 when the MEMS arming device 100 is in the rest position, shown in Fig. 1A. This prevents the operation of thermal activator 112 from moving push-rod 114 in the direction 152 when in the rest position. This feature prevents MEMS arming device 100 from entering a fully armed state prior to the munition being fired. This provides a dual-interlock safety feature, which prevents thermal actuator 112, even if accidentally activated during the rest state, from fully arming MEMS device 100 unless shuttle A 103 has first been latched following the firing of the munition.

As shown in Fig. 1B, the MEMS arming device 100 is in the partially armed position after the munition has been fired. When the munition is fired, the inertia of shuttle A, 103, causes it to move in the horizontal direction 150 relative to the MEMS arming device 100 movement. The MEMS arming device 100 is designed to have a high acceleration threshold which prevents the MEMS arming device 100 from being activated by dropping or other shock forces. The threshold acceleration needed to latch shuttle A is determined essentially by the dimensions of the four support springs, e.g., 102. This feature ensures that MEMS arming device 100 is only to be activated by the substantial acceleration forces of 10,000 to 80,000g generated when the munition is fired. The absorbing stop 109 is used to limit the horizontal movement of shuttle A. The result is that shuttle A is moved horizontally in direction 150 (relative to the MEMS housing 101) and latched into the firing position by the two latches 104. With shuttle A latched, the fuse window 110 in shuttle B has also been moved horizontally in direction 150 and is now positioned vertically below the fuse window 109 in the Silicon Wafer 301. In this partially armed position (intermediate switch state), the thermal actuator 112 is now aligned below and, when thermally activated, can engage the vertical extension 108 and cause shuttle B to move in the vertical direction 152 to the fully armed position.

Shown in Fig. 1C is the MEMS arming device 100 in the fully armed position (second switch state) after the munition has been fired and the on-demand thermal actuator 112 is pulsed in response to a pulsed activation signal. After the pulse the thermal actuator 112 returns to it original position, as shown, leaving shuttle B in its latched position. The thermal actuator 112 provides a thermal interlock safety feature, which insures that the MEMS arming device 100 does not enter the fully armed position (second switch state) without both the activation of both the acceleration interlock and thermal interlock safety features. The thermal actuator 112 is activated by the application of an electrical signal applied across the pads 112A. When thermally activated the arms 113 are heated, they expand and deflect upward forcing push-rod 114 in the vertical direction 152 to engage the vertical extension 108 and cause shuttle B to move vertically to the fully armed position. The two latch springs 107 latch keeping shuttle B in the fully armed position. In the fully armed position the fuse window 110 in shuttle B has been moved up vertically in direction 152 so that it is now positioned directly over the fuse window 109 in the Silicon Wafer 301.

With reference to Fig. 12B, in this fully armed position a laser 1202 signal can pass through the aligned fuse windows 110 and 109 and impinge the ignitor 1204 and cause detonation 1005 of explosive charge 1206.

Fig. 2 illustrates my MEMS arming device 100 further including an electrical safety interlock 200. The electrical safety interlock 200 includes a switch 201 that is etched as part of shuttle A and, consequently, switch 201 is not closed until the munition is fired. After firing, a ground signal from lead 203 is coupled through springs 102, shuttle A, switch 201 to contact pad 202. This ground signal could provide a control signal to enable a control circuit (not shown) to provide an electrical signal to activate the thermal activator 112. For example this control signal may be used to activate the laser (or electrical device) that will, after the thermal actuator 112 is activated, detonate the munition.

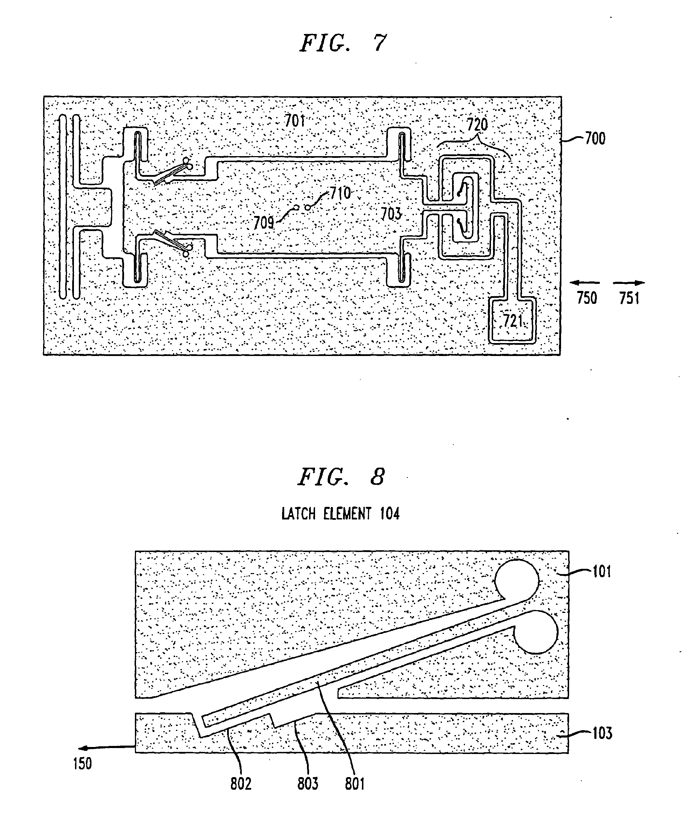

Shown in Fig. 7 is a second embodiment of my MEMS device 700 having only one shuttle 703. Other than including only shuttle A, MEMS device 700 may be implemented to include all of the other elements and features of the MEMS devices shown in Figs. 1 and 2. The MEMS device 700 is shown in its rest position and the circular window 710 of shuttle A 701 is shown horizontally displaced from the circular window 709, shown in dotted-line form, in the Silicon Wafer. The MEMS device is also shown to include electrical switch 720. When MEMS device 700 undergoes a predetermined acceleration in direction 751, shuttle 701 moves in the direction 750 relative to MEMS device 700. After acceleration, shuttle 703 has moved so that the circular window 710 aligns with circular window 709 and electrical switch 720 has been closed applying a control signal to pad 721. In accordance with the present invention, the design of MEMS device 700 can be adapted for use as an automobile accelerometer to detect inertial (deceleration) forces that occur during a car collision. In such an application, MEMS device 700 detects a predefined acceleration (i.e., deceleration of the car), which causes shuttle 703 to close electrical switch 720 thereby generating a control signal to initiate deployment of the air-bag.

### Etching the MEMS Arming Device

The following discussion makes joint reference to Figs. 1 and 3. As noted previously, in Figs. 1 A - 1C and 2, the Silicon layer 303 is shown in grey and the etched-out region of the Silicon layer, which reveals the Silicon Oxide layer 302, is shown in white. Since the movable elements of MEMS arming device 100 including the shuttle A, 103, shuttle B, 107, absorbing stop 109, arms 113, push-rod 114, and switch 201 (of Fig. 2) must all be free to move relative to the housing 101 and Silicon wafer 301, the Oxide layer 302 needs to be etched away under all of these movable elements. Briefly, the MEMS device 100 is formed by (A) first patterning and etching the movable elements in the Silicon layer 303 (i.e., second layer) and stopping on the Silicon Oxide layer 302 (i.e., first dielectric layer or electrically insulating layer), (B) patterning and etching a predetermined pattern in the Silicon Wafer 301 (i.e., semiconductor wafer) from the bottom surface and stopping on the Silicon Oxide layer 302, (C) etching away the exposed regions of the Silicon oxide layer 302, and (D) continuing this etch to allow undercutting sufficient to free the moveable elements from the Silicon Wafer 301. This procedure for etching the moveable elements is more fully described in the following paragraph.

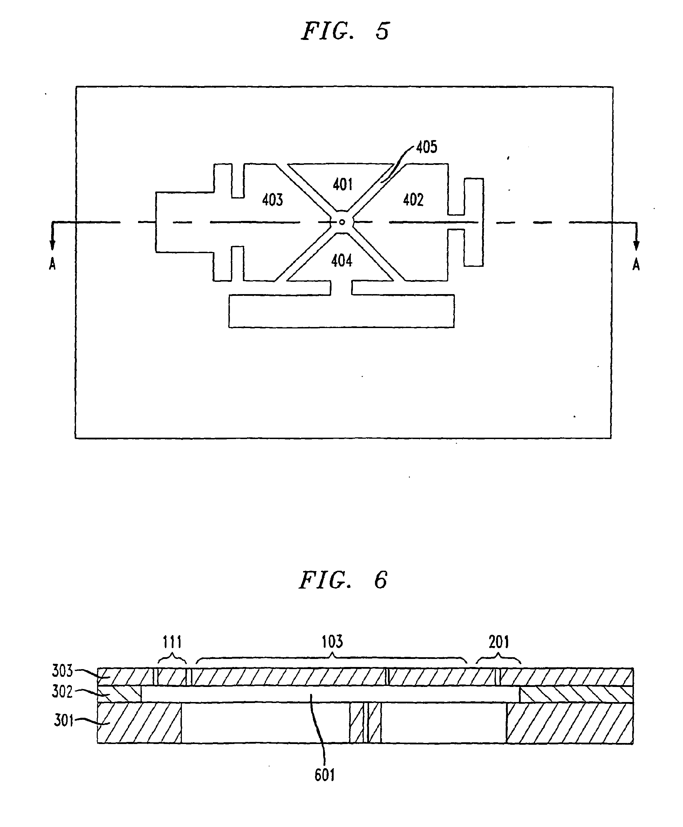

With reference to Fig. 3, there is shown an illustrative B - B cross section of the shuttle A element of Fig. 2. First the Silicon layer 303 (shown in grey in Fig. 2) has been etched away using a reactive ion etch (RIE). Next the portion 307 of the Silicon wafer 301 is etched away using a deep reactive ion etch (DRIE). Next an oxide etching solution is applied which will etch region 308 of Oxide layer 302 not protected by the Silicon layers 303 or 301 and then etch the regions 305 of Oxide layer 302 located under the Silicon layers 303 and 301.. This is shown illustratively in Fig. 6 where the region 601 of Oxide layer 302 below the moveable elements shuttle A, 103 (including switch 201) and absorbing stop 109 has been etched away enabling these elements to be suspended from housing 101 and free to move. The shuttle A, 103 is suspended from housing 101 by its four support springs 102 and absorbing stop 109 is also suspended from housing 101.

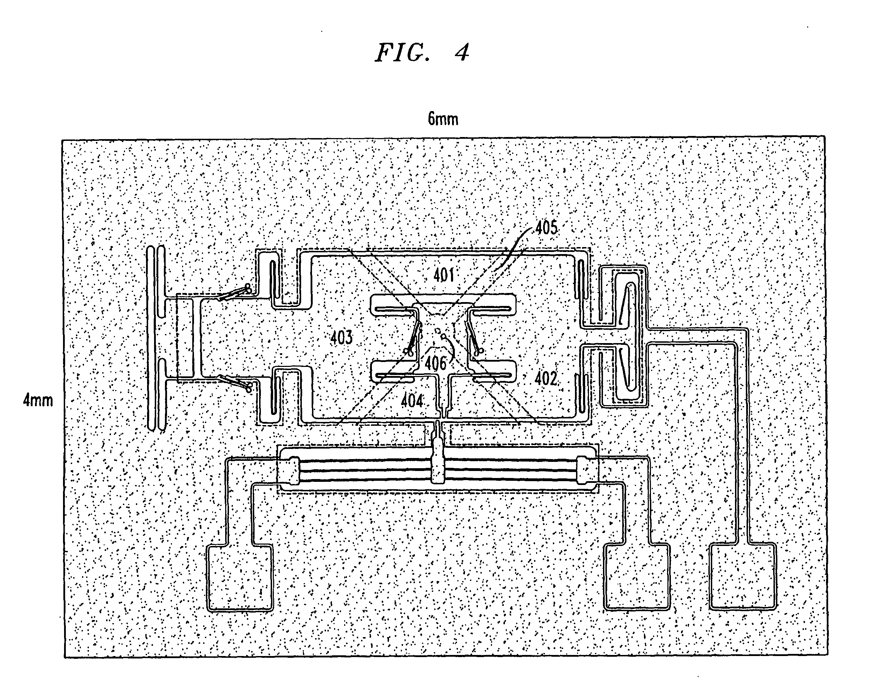

Fig. 4 is a top view of the MEMS arming device 100 showing the various areas of Silicon wafer 301, in dotted lines, that are to be etched from the bottom or Silicon wafer 301 side. To insure that the entire Oxide layer 302 is removed below the moveable elements, the Silicon wafer 301 side is etched in the regions 401 - 404 exposing the bottom side of Oxide layer 302. As a result, the "X" shaped region 405 and other areas as well as the perimeter portion of the housing 101 of Silicon wafer 301 serve as a mask to define the bottom side regions of Oxide layer 302 to be etched. The fuse window 107 opening is also etched in Silicon Wafer 301. The resulting dotted line shaped mask of Fig. 4 is shown in Fig. 5. The bottom side of Oxide layer 302 that has been exposed by the silicon wafer mask of Fig. 5, i.e., regions 401 - 404, can then be etched away. This is shown illustratively in the cross section Fig. 6, where the Oxide region 601 below the moveable elements shuttle A, 103 (including switch 201) and absorbing stop 109 has been etched away. Thus, by etching the Oxide layer 302 from both the top side and the bottom side I am able to remove the entire Oxide layer 302 from beneath the moveable elements of MEMS arming device 100.

### Element Details

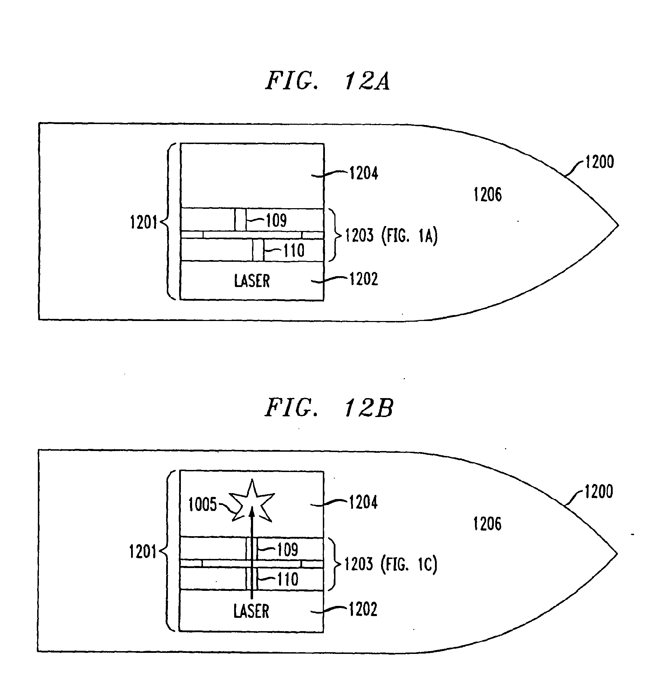

Figures 8 - 11 show details of the Latch Element, Absorbing Stop, Support Spring, and Shuttle B, respectively. Shown in Fig. 8 is an illustrative Latch element 104 formed in the housing portion 101 of MEMS arming device 100 and includes a cantilevered beam 701, the free end of which extends into a notch 702 formed in shuttle A, 103. As depicted shuttle A is in the rest position. When shuttle A moves in the direction 150 in response to the firing of the munition, the free end of cantilevered beam 701 ratchets over from notch 702 to and latches in notch 703. While the construction of the other Latch elements 107 of shuttle B are somewhat smaller than Latch element 104 they operate in the same manner when shuttle B is moved in direction 152. It should be noted that the arrangement of latch springs 104 and 107 can be reversed such that, e.g., the notches 702, 703 of latch spring 104 are located on the housing 101 and the beam 701 portion located on shuttle A.

Figure 8 illustratively shows the construction of Absorbing Stop 109. Figure 9 shows the construction of support springs 102, the support springs 106 being comparable in size. Figure 10 shows an enlargement of shuttle B, 105, illustrating the construction thereof.

## Claims

1. A micro-electrical-mechanical-systems, MEMS, monolithic semiconductor device, comprising:
a semiconductor wafer (301), a first dielectric layer (302) formed on the semiconductor wafer, and a second semiconductor layer (303) formed on the first layer;
a first latching movable shuttle (103) formed in the second layer and having the first layer removed under the first shuttle, the first shuttle adapted to move in a first direction (150) relative to the wafer in response to a predetermined acceleration of the MEMS device in a direction opposite to the first direction so as to change an operating condition of the MEMS device from a first switch state to an intermediate switch state, **CHARACTERIZED by**:
a second latching moveable shuttle (105) formed within the first shuttle, the second shuttle being moved in a second direction relative to the first shuttle in response to a thermally activated force so as to change the operating state of the MEMS device from the intermediate switch state to a second switch state; wherein, in the second switch state, an opening (110) in the second shuttle aligns with an opening (109) in the wafer to enable an optical signal to pass through the aligned openings.

2. The MEMS device of claim 1 further comprising
means (108, 114) for preventing the movement of the second shuttle prior to the movement of the first shuttle.

3. The MEMS device of claim 1, further comprising
an electrical switch (200, 720) for providing an electrical switch connection, wherein said electrical switch is adapted to change its state upon the MEMS device transition from the first state to the intermediate state.

4. The MEMS device of claim 1 further comprising
an absorbing stop (111) formed in the second layer for limiting the movement of the first shuttle in the first direction.

5. The MEMS device of claim 1 further comprising
a thermal actuator (112) responsive to an electrical signal for generating the actuator force.

6. The MEMS device of claim 1, further comprising a movable rod (114) formed in the second layer and adapted to:
move with respect to the first and second shuttles in response to the actuator force; and
push the second shuttle from a position corresponding to the intermediate switch state to a position corresponding to the second switch state.

7. The MEMS device of claim 1, wherein position of the second shuttle with respect to the first shuttle is unchanged upon transition from the first switch state to the intermediate switch state.

8. The MEMS device of claim 1, wherein:
the second shuttle is adapted to move in a second direction (152) relative to the first shuttle in response to the actuator force;
in the first switch state, the opening in the second shuttle is displaced from the opening in the wafer along the first and second directions; and
in the intermediate switch state, the opening in the second shuttle is displaced from the opening in the wafer along the second direction, but said openings are aligned with one another along the first direction.

9. The MEMS device of claim 1, further comprising two or more springs (106), each connected between the first and second shuttles.

10. A method of operating a MEMS monolithic semiconductor device comprising a semiconductor wafer (301), a first dielectric layer (302) formed on the semiconductor wafer, and a second semiconductor layer (303) formed on the first layer, the method comprising the steps of:
latching a first movable shuttle (103) formed in the second layer and having the first layer removed under the first movable shuttle, the first movable shuttle being moved in a first direction relative to the wafer in response to a predetermined acceleration of the MEMS device in a direction opposite to the first direction, the latched first movable shuttle changing an operating state of the MEMS switch from a first state to an intermediate state **CHARACTERIZED by**:
latching a second moveable shuttle (105) formed within the first shuttle, the second shuttle being moved in a second direction relative to the first shuttle in response to a thermally activated force so as to change the operating state of the MEMS device from the intermediate state to a second state, wherein, in the second state, an opening (110) in the second shuttle aligns with an opening (109) in the wafer to enable an optical signal to pass through the aligned openings.

11. The method of claim 10, wherein the step of latching the second movable shuttle comprises pushing the second shuttle relative to the first shuttle in a second direction from a position corresponding to the intermediate state to a position corresponding to the second state with a movable rod (114) formed in the second layer and adapted to move with respect to the first and second shuttles in response to the actuator force.

## Patentansprüche

1. Monolithische Halbleitervorrichtung mit mikroelektrisch-mechanischem System (MEMS), umfassend:
einen Halbleiterwafer (301), eine erste dielektrische Schicht (302), die auf dem Halbleiterwafer gebildet ist, und eine zweite Halbleiterschicht (303), die auf der ersten Schicht gebildet ist;
ein erstes verriegelbares bewegliches Pendelschiffchen (103), das in der zweiten Schicht gebildet ist, wobei die erste Schicht unter dem ersten Pendelschiffchen beseitigt ist, wobei das erste Pendelschiffchen dazu geeignet ist, sich als Reaktion auf eine vorbestimmte Beschleunigung der MEMS-Vorrichtung in eine Richtung, die zu der ersten Richtung entgegengesetzt ist, in Bezug auf den Wafer in eine erste Richtung (150) zu bewegen, um einen Betriebszustand der MEMS-Vorrichtung von einem ersten Schaltzustand zu einem Zwischenschaltzustand zu verändern,
**gekennzeichnet durch**
ein zweites verriegelbares bewegliches Pendelschiffchen (105), das im ersten Pendelschiffchen gebildet ist, wobei das zweite Pendelschiffchen als Reaktion auf eine wärmeaktivierte Kraft in Bezug auf das erste Pendelschiffchen in eine zweite Richtung bewegt wird, um den Betriebszustand der MEMS-Vorrichtung vom Zwischenschaltzustand zu einem zweiten Schaltzustand zu verändern, wobei sich im zweiten Schaltzustand eine Öffnung (110) im zweiten Pendelschiffchen mit einer Öffnung (109) im Wafer ausrichtet, um zu ermöglichen, dass ein optisches Signal **durch** die ausgerichteten Öffnungen verläuft.

2. MEMS-Vorrichtung nach Anspruch 1, ferner umfassend ein Mittel (108, 114), um die Bewegung des zweiten Pendelschiffchens vor der Bewegung des ersten Pendelschiffchens zu verhindern.

3. MEMS-Vorrichtung nach Anspruch 1, ferner umfassend einen elektrischen Schalter (200, 720), um eine elektrische Schaltverbindung bereitzustellen, wobei der elektrische Schalter dazu geeignet ist, seinen Zustand beim Übergang der MEMS-Vorrichtung vom ersten Zustand zum Zwischenzustand zu verändern.

4. MEMS-Vorrichtung nach Anspruch 1, ferner umfassend einen absorbierenden Anschlag (111), der in der zweiten Schicht gebildet ist, um die Bewegung des ersten Pendelschiffchens in der ersten Richtung zu beschränken.

5. MEMS-Vorrichtung nach Anspruch 1, ferner umfassend ein Wärmebetätigungselement (112), das auf ein elektrisches Signal anspricht, um die Betätigungselementkraft zu erzeugen.

6. MEMS-Vorrichtung nach Anspruch 1, ferner umfassend einen beweglichen Stab (114), der in der zweiten Schicht gebildet ist und dazu geeignet ist,
sich als Reaktion auf die Betätigungselementkraft in Bezug auf das erste und das zweite Pendelschiffchen zu bewegen; und
das zweite Pendelschiffchen von einer Position, die mit dem Zwischenschaltzustand übereinstimmt, in eine Position, die mit dem zweiten Schaltzustand übereinstimmt, zu schieben.

7. MEMS-Vorrichtung nach Anspruch 1, wobei die Position des zweiten Pendelschiffchens in Bezug auf das erste Pendelschiffchen nach dem Übergang vom ersten Schaltzustand zum Zwischenschaltzustand unverändert ist.

8. MEMS-Vorrichtung nach Anspruch 1, wobei:
das zweite Pendelschiffchen dazu geeignet ist, sich als Reaktion auf die Betätigungselementkraft in Bezug auf das erste Pendelschiffchen in eine zweite Richtung (152) zu bewegen;
die Öffnung im zweiten Pendelschiffchen im ersten Schaltzustand entlang der ersten und der zweiten Richtung von der Öffnung im Wafer verschoben ist; und
die Öffnung im zweiten Pendelschiffchen im Zwischenschaltzustand entlang der zweiten Richtung von der Öffnung im Wafer verschoben ist, aber die Öffnungen entlang der ersten Richtung miteinander ausgerichtet sind.

9. MEMS-Vorrichtung nach Anspruch 1, ferner umfassend zwei oder mehr Federn (106), die jeweils zwischen dem ersten und dem zweiten Pendelschiffchen angeschlossen sind.

10. Verfahren zum Betreiben einer monolithischen Halbleiter-MEMS-Vorrichtung, umfassend einen Halbleiterwafer (301), eine erste dielektrische Schicht (302), die auf dem Halbleiterwafer gebildet ist, und eine zweite Halbleiterschicht (303), die auf der ersten Schicht gebildet ist, wobei das Verfahren die folgenden Schritte umfasst:
Verriegeln eines ersten beweglichen Pendelschiffchens (103), das in der zweiten Schicht gebildet ist, wobei die erste Schicht unter dem ersten beweglichen Pendelschiffchen entfernt ist, wobei das erste bewegliche Pendelschiffchen als Reaktion auf eine vorbestimmte Beschleunigung der MEMS-Vorrichtung in eine Richtung, die zu der ersten Richtung entgegengesetzt ist, in Bezug auf den Wafer in eine erste Richtung bewegt wird, wobei das verriegelte erste bewegliche Pendelschiffchen einen Betriebszustand des MEMS-Schalters von einem ersten Zustand zu einem Zwischenzustand verändert,
**gekennzeichnet durch**:
Verriegeln eines zweiten beweglichen Pendelschiffchens (105), das im ersten Pendelschiffchen gebildet ist, wobei das zweite Pendelschiffchen als Reaktion auf eine wärmeaktivierte Kraft in Bezug auf das erste Pendelschiffchen in eine zweite Richtung bewegt wird, um den Betriebszustand der MEMS-Vorrichtung vom Zwischenzustand zu einem zweiten Zustand zu verändern, wobei sich im zweiten Zustand eine Öffnung (110) im zweiten Pendelschiffchen mit einer Öffnung (109) im Wafer ausrichtet, um zu ermöglichen, dass ein optisches Signal **durch** die ausgerichteten Öffnungen verläuft.

11. Verfahren nach Anspruch 10, wobei der Schritt des Verriegelns des zweiten beweglichen Pendelschiffchens das Schieben des zweiten Pendelschiffchens mit einem beweglichen Stab (114), der in der zweiten Schicht gebildet ist und dazu geeignet ist, sich als Reaktion auf die Betätigungselementkraft in Bezug auf das erste und das zweite Pendelschiffchen zu bewegen, in Bezug auf das erste Pendelschiffchen in eine zweite Richtung von einer Position, die dem Zwischenzustand entspricht, in eine Position, die dem zweiten Zustand entspricht, umfasst.

## Revendications

1. Dispositif semi-conducteur monolithique à système microélectromécanique, MEMS, comprenant :
une tranche de semi-conducteur (301), une première couche diélectrique (302) formée sur la tranche de semi-conducteur, et une deuxième couche semi-conductrice (303) formée sur la première couche ;
une première navette mobile à verrouillage (103) formée dans la deuxième couche et ayant la première couche retirée sous la première navette, la première navette étant adaptée pour se déplacer dans une première direction (150) par rapport à la tranche en réponse à une accélération prédéterminée du dispositif MEMS dans une direction opposée à la première direction de manière à faire passer l'état de fonctionnement du dispositif MEMS d'un premier état de commutation à un état de commutation intermédiaire,
**caractérisé par** :
une deuxième navette mobile à verrouillage (105) formée à l'intérieur de la première navette, la deuxième navette étant déplacée dans une deuxième direction par rapport à la première navette en réponse à une force thermiquement activée de manière à faire passer l'état de fonctionnement du dispositif MEMS de l'état de commutation intermédiaire à un deuxième état de commutation, dans lequel, dans le deuxième état de commutation, une ouverture (110) dans la deuxième navette s'aligne sur une ouverture (109) dans la tranche pour permettre à un signal optique de traverser les ouvertures alignées.

2. Dispositif MEMS selon la revendication 1, comprenant en outre
un moyen (108, 114) permettant d'empêcher tout déplacement de la deuxième navette avant le déplacement de la première navette.

3. Dispositif MEMS selon la revendication 1, comprenant en outre
un commutateur électrique (200, 720) pour fournir une connexion par commutation électrique, dans lequel ledit commutateur électrique est adapté pour faire passer son état lors de la transition du dispositif MEMS du premier état à l'état intermédiaire.

4. Dispositif MEMS selon la revendication 1, comprenant en outre
une butée absorbante (111) formée dans la deuxième couche pour limiter le mouvement de la première navette dans la première direction.

5. Dispositif MEMS selon la revendication 1, comprenant en outre
un actionneur thermique (112) sensible à un signal électrique pour générer la force d'actionnement.

6. Dispositif MEMS selon la revendication 1, comprenant en outre une tige mobile (114) formée dans la deuxième couche et adaptée pour :
se déplacer par rapport à la première et la deuxième navettes en réponse à la force d'actionnement ; et
pousser la deuxième navette depuis une position correspondant à l'état de commutation intermédiaire jusqu'à une position correspondant au deuxième état de commutation.

7. Dispositif MEMS selon la revendication 1, dans lequel la position de la deuxième navette par rapport à la première navette est inchangée lors de la transition du premier état de commutation à l'état de commutation intermédiaire.

8. Dispositif MEMS selon la revendication 1, dans lequel :
la deuxième navette est adaptée pour se déplacer dans une deuxième direction (152) par rapport à la première navette en réponse à la force d'actionnement ;
dans le premier état de commutation, l'ouverture dans la deuxième navette est déplacée par rapport à l'ouverture dans la tranche le long de la première et de la deuxième directions ; et
dans l'état de commutation intermédiaire, l'ouverture dans la deuxième navette est déplacée par rapport à l'ouverture dans la tranche le long de la deuxième direction, mais lesdites ouvertures sont alignées l'une sur l'autre le long de la première direction.

9. Dispositif MEMS selon la revendication 1, comprenant en outre deux ressorts ou plus (106), chacun étant attaché entre la première et la deuxième navettes.

10. Procédé de fonctionnement d'un dispositif semi-conducteur monolithique MEMS comprenant une tranche de semi-conducteur (301), une première couche diélectrique (302) formée sur la tranche de semi-conducteur, et une deuxième couche semi-conductrice (303) formée sur la première couche, le procédé comprenant les étapes de :
verrouillage d'une première navette mobile (103) formée dans la deuxième couche et ayant la première couche retirée sous la première navette mobile, la première navette mobile étant déplacée dans une première direction par rapport à la tranche en réponse à une accélération prédéterminée du dispositif MEMS dans une direction opposée à la première direction, la première navette mobile verrouillée faisant passer l'état de fonctionnement du commutateur MEMS d'un premier état à un état intermédiaire, **caractérisé par** :
le verrouillage d'une deuxième navette mobile (105) formée à l'intérieur de la première navette, la deuxième navette mobile étant déplacée dans une deuxième direction par rapport à la première navette en réponse à une force thermiquement activée de manière à faire passer l'état de fonctionnement du dispositif MEMS de l'état intermédiaire à un deuxième état, dans lequel, dans le deuxième état, une ouverture (110) dans la deuxième navette s'aligne sur une ouverture (109) dans la tranche pour permettre à un signal optique de traverser les ouvertures alignées.

11. Procédé selon la revendication 10, dans lequel l'étape de verrouillage de la deuxième navette mobile comprend la poussée de la deuxième navette par rapport à la première navette dans une deuxième direction depuis une position correspondant à l'état intermédiaire jusqu'à une position correspondant au deuxième état avec une tige mobile (114) formée dans la deuxième couche et adaptée pour se déplacer par rapport à la première et la deuxième navettes en réponse à la force d'actionnement.
